# FASCICULE DE BREVET EUROPEEN

(11) **EP 1 296 778 B1**
(45) Date de publication et mention de la délivrance du brevet: **02.01.2008**
(21) Numéro de dépôt: 01947518.5
(22) Date de dépôt: 19.06.2001
(51) Int. Cl.: B07C 1/00

(54) **POSTE DE VIDEO-CODAGE POUR INSTALLATION DE TRI AUTOMATIQUE D'OBJETS POSTAUX**
VIDEOKODIERUNGSSTAND ZUR VERWENDUNG IN EINER AUTOMATISCHEN POSTSORTIERANLAGE
VIDEO CODING STATION FOR INSTALLATION AUTOMATICALLY SORTING POSTAL OBJECTS

(30) Priorité: 20.06.2000 FR 0007850
(43) Date de publication de la demande: 02.04.2003
(73) Titulaire: Solystic, 94257 Gentilly Cedex (FR)
(72) Inventeur: LHOMME, Christophe, F-75014 Paris (FR)
(74) Mandataire: Prugneau, Philippe
(86) Numéro de dépôt international: PCT/FR2001/001901
(87) Numéro de publication internationale: WO 2001/097986

(56) Documents cités:
- EP-A- 0 436 884
- EP-A- 0 589 119
- DE-A- 19 646 522
- FR-A- 2 591 512

## Description

L'invention concerne le traitement automatique du courrier et plus particulièrement le traitement automatique de paquets postaux dans un processus de tri automatique de paquets postaux.

Un processus de tri automatique d'objets postaux du type lettres, est réalisé classiquement par un convoyage sur chant de chaque lettre pour la faire passer devant une caméra de façon à saisir une image numérique de la lettre qui peut ensuite être binarisée et filtrée pour réaliser sur l'image une reconnaissance automatique d'adresse postale. De façon générale, sur ce type de courrier, l'adresse postale est disposée parallèlement au pied de la lettre ou perpendiculairement à celui-ci, c'est à dire parallèlement à un bord de l'image, de sorte qu'un algorithme de reconnaissance automatique de caractères peut être appliqué directement sur une partie rectangulaire de l'image numérique.

Les objets postaux du type paquet sont des objets généralement volumineux qui sont convoyés à plat sur un tapis. Avec ce type de convoyage et ce type d'objets postaux, il n'est pas toujours possible d'appliquer directement sur l'image du paquet saisie par une caméra, un algorithme de reconnaissance automatique de caractères du fait que ces objets sont généralement très chargés en logos, vignettes et autres inscriptions et qu'il n'existe pas de méthode fiable pour détecter automatiquement dans l'image d'un paquet postal la zone de l'image qui contient l'adresse postale pertinente. Par ailleurs, sur ce type d'objet postal, l'adresse postale qui devrait être lue automatiquement à partir de l'image de l'objet est généralement à une position qui varie largement d'un objet postal à l'autre. Dans les installations de tri automatique du courrier, un poste de vidéo-codage est souvent prévu pour traiter de façon semi-automatique la lecture de l'adresse postale si celle-ci n'a pu être lue par reconnaissance automatique de caractères.

Un tel poste de vidéo-codage comprend généralement une unité centrale destinée à maintenir en mémoire une image numérique d'un objet postal, un écran connecté à l'unité centrale pour l'affichage de ladite image d'un objet postal de façon à permettre à un opérateur de visualiser dans l'image une adresse postale de l'objet postal, et un clavier connecté à l'unité centrale pour permettre à l'opérateur de saisir manuellement l'adresse postale de l'objet afin de pouvoir orienter cet objet de façon automatique vers une sortie de tri correspondante de l'installation de tri postal, voir p. ex. DE-A-19 646 522 ou FR-A-2 591 512.

Le but de l'invention est de perfectionner un tel poste de vidéo-codage pour traiter facilement des images de paquets postaux.

A cet effet, l'invention a pour objet un poste de vidéo-codage pour une installation de traitement automatique d'objets postaux, notamment des paquets, comprenant une unité centrale destinée à maintenir en mémoire une image numérique d'un objet postal, un écran connecté à l'unité centrale pour l'affichage de ladite image d'un objet postal de façon à permettre à un opérateur de visualiser dans l'image une adresse postale de l'objet postal, et un clavier connecté à l'unité centrale pour permettre à l'opérateur de saisir manuellement l'adresse postale de l'objet, caractérisé en ce que le dit poste comporte en outre un dispositif de pointage relié à l'unité centrale et apte à déplacer sur l'image de l'objet affichée à l'écran un réticule de forme rectangulaire de telle façon à permettre à l'opérateur de circonscrire l'adresse postale à l'intérieur du réticule en manoeuvrant ledit dispositif de pointage, en ce que l'unité centrale est programmée pour afficher, en réponse à une commande entrée par le clavier, un champ de vecteurs sur ladite image de l'objet et orienter dans le plan de l'image ledit champ de vecteurs en réponse à une manoeuvre du dispositif de pointage pour aligner le champ de vecteurs avec les lignes de l'adresse postale.

Avec un tel poste de vidéo-codage, l'opérateur de vidéo-codage peut facilement délimiter à l'aide du réticule la zone de l'image d'un paquet postal contenant une adresse postale et saisir à l'aide de l'orientation du champ de vecteurs la direction et le sens des lignes de l'adresse postale de façon à permettre ensuite l'application d'un algorithme de reconnaissance automatique de caractères sur cette zone d'image.

Selon un mode de réalisation préféré du poste de vidéo-codage selon l'invention, l'unité centrale est programmée pour agrandir ou réduire les dimensions du réticule rectangulaire en réponse à une commande entrée par le dispositif de pointage ce qui permet d'ajuster la taille de la zone de l'image sur laquelle doit être appliqué l'algorithme de reconnaissance automatique de caractères.

Un exemple de réalisation du poste de vidéo-codage selon l'invention sera maintenant décrit plus en détail, et illustré sur des dessins.
La figure 1 est un organigramme illustrant différentes étapes de traitement dans une installation de tri d'objets postaux.
La figure 2 est une représentation schématique d'un poste de vidéo-codage.
La figure 3 est une représentation schématique de l'identification d'une zone d'intérêt avec le poste de vidéo-codage selon l'invention
La figure 4 est une représentation schématique de l'identification d'une orientation de l'adresse de destinataire avec le poste de vidéo-codage selon l'invention.

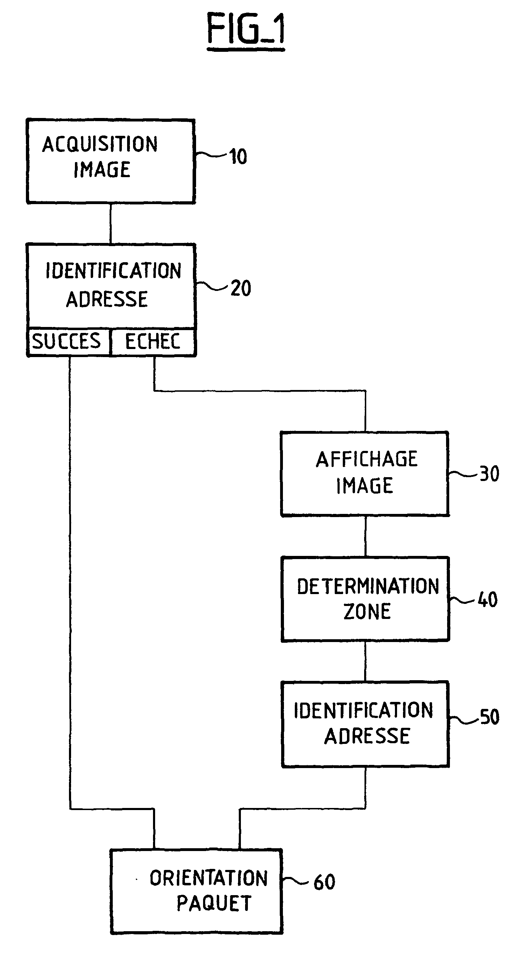

La figure 1 illustre de façon très schématique sous la forme d'un organigramme une partie d'un processus de tri de paquets postaux incluant des étapes d'un traitement d'images numériques des paquets en vue de lire automatiquement sur chaque paquet postal une adresse postale qui servira dans le processus de tri à diriger automatiquement le paquet considéré vers une sortie de tri correspondante.

En 10, un paquet convoyé à plat sur un tapis mobile passe sous une caméra qui saisit une image numérique IP du paquet. D'une manière générale, une telle image numérique fait l'objet d'opérations telles que binarisation, suppression des pixels noirs isolés, de telles opérations étant destinées à réduire la taille du fichier informatique correspondant à l'image numérique.

En 20, un algorithme de reconnaissance automatique de caractères est appliqué à l'image numérique IP en vue d'identifier dans cette image l'adresse de destinataire du paquet postal correspondant. Plus particulièrement, un tel algorithme réduit généralement l'image IP à une ou plusieurs zones d'intérêt, et extrait ensuite de ces zones d'intérêt des chaînes de caractère, avant d'analyser ces chaînes de caractères en les comparant par exemple avec une base de données, pour identifier l'adresse de destinataire du paquet postal. D'une manière générale, les paquets postaux comprennent une grande quantité d'informations, si bien qu'un tel algorithme échoue fréquemment du fait qu'il ne parvient pas à détecter dans l'image numérique IP du paquet la zone d'intérêt comprenant l'adresse de destinataire. Ainsi, l'issue de l'étape 20 peut être un succès si l'identification automatique de l'adresse de destinataire réussit, auquel cas, le paquet postal est dirigé en 60 vers la sortie de tri correspondant à l'adresse de destinataire identifiée ou un échec, si l'adresse de destinataire n'a pu être identifiée, auquel cas, l'image numérique IP du paquet est transmise en 30 au poste de vidéo-codage selon l'invention pour qu'un opérateur de vidéo-codage identifie la zone d'intérêt contenant l'adresse de destinataire dans l'image numérique IP du paquet.

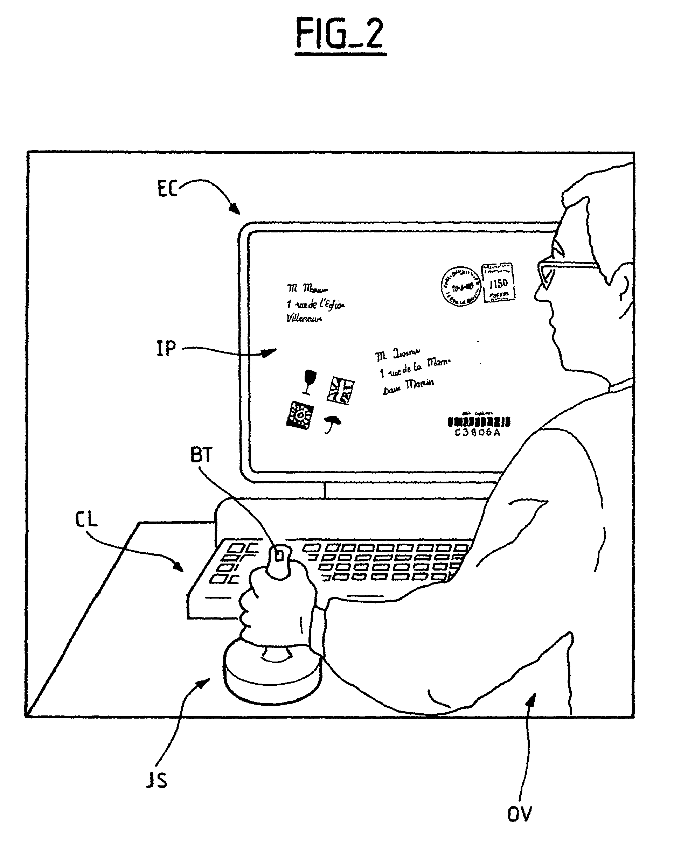

En 30, l'image IP du paquet postal est transmise puis affichée sur l'écran du poste de vidéo-codage. En se référant à la figure 2 dans laquelle on a représenté schématiquement un poste de vidéo-codage selon l'invention, on peut voir un opérateur OV qui est installé devant un poste de vidéo-codage selon l'invention. Ce poste qui peut être un ordinateur comprend un écran EC sur lequel est affichée l'image IP, un clavier CL, et un dispositif de pointage JS qui est une manette orientable, de type « joystick », comprenant notamment un bouton de tir BT.

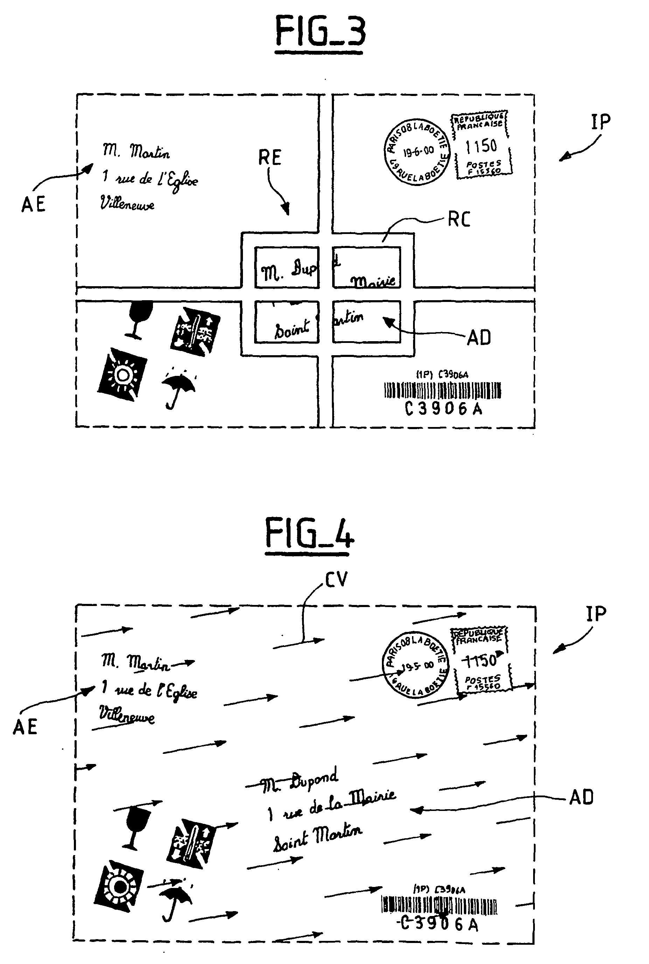

En 40, l'opérateur de vidéo-codage identifie la localisation et l'orientation de l'adresse postale dans l'image numérique IP du paquet. En se référant à la figure 3 dans laquelle on a représenté de façon schématique la localisation de l'adresse postale, on peut voir l'image IP telle qu'elle est affichée sur l'écran du poste de vidéo-codage. Cette image comprend entre autres une adresse postale de destinataire AD et une adresse postale d'expéditeur AE, ainsi que divers logos et vignettes. Pour localiser l'adresse postale de destinataire, l'opérateur de vidéo-codage fait apparaître un réticule RE en pressant un des boutons de la manette JS ou une touche de fonction du clavier CL, puis place le réticule RE sur le centre de l'adresse de destinataire, en manoeuvrant la manette JS, de manière à ce que le rectangle RC du réticule RE entoure ladite adresse, avant de valider son choix en pressant le bouton de tir BT de la manette JS. Plus particulièrement, le poste de vidéo-codage qui est interconnecté avec la manette JS est programmé pour qu'en manipulant la manette JS, on obtienne un déplacement du réticule RE sur l'image, de manière à placer ce réticule sur le centre de la zone que l'on souhaite localiser. En variante, une commande accessible depuis la manette JS ou depuis le clavier permettra d'ajuster la taille du rectangle RC pour que celui-ci englobe toute l'adresse AD.

Après que la localisation de l'adresse AD ait été réalisée, l'opérateur va activer la fonction orientation en pressant une touche de la manette JS ou du clavier CL, pour définir l'orientation et la direction des lignes de l'adresse AD. En se reportant à la figure 4 dans laquelle on a représenté de manière schématique l'identification de l'orientation des lignes de l'adresse AD, on peut voir que le poste de vidéo-codage affiche un champ de vecteurs CV sur l'image du paquet IP. Plus particulièrement, le poste de vidéo-codage selon l'invention est programmé pour qu'en agissant sur la manette JS, l'opérateur fasse tourner le champ de vecteurs CV de manière à faire correspondre ce champ de vecteurs avec la direction et le sens selon lesquels est inscrite l'adresse postale AD. Ainsi, la zone d'intérêt qui a été complètement identifiée par l'opérateur de vidéo-codage est ensuite soumise en 50 à un algorithme de reconnaissance automatique de caractères qui va identifier l'adresse de destinataire AD en considérant que cette adresse est inscrite dans cette zone d'intérêt selon la direction et le sens définis par l'opérateur de vidéo-codage.

En 60, le paquet est orienté vers une sortie de tri correspondant à l'adresse de destinataire qui a été identifiée selon le cas en 20 ou en 50.

Ainsi, le poste de vidéo-codage selon l'invention est particulièrement destiné au tri d'objets postaux volumineux, pour lesquels il permet de réaliser un traitement semi-automatique en un temps très court du fait qu'il minimise la quantité de manipulations par l'opérateur de vidéo-codage grâce à l'utilisation d'une manette orientable.

## Revendications

1. Un poste de vidéo-codage pour une installation de traitement automatique d'objets postaux, notamment des paquets, comprenant une unité centrale destinée à maintenir en mémoire une image numérique d'un objet postal, un écran (EC) connecté à l'unité centrale pour l'affichage de ladite image d'un objet postal de façon à permettre à un opérateur de visualiser dans l'image une adresse postale (AD) de l'objet postal, et un clavier connecté à l'unité centrale pour permettre à l'opérateur de saisir manuellement l'adresse postale de l'objet, **caractérisé en ce que** le dit poste comporte en outre un dispositif de pointage (JS) relié à l'unité centrale et apte à déplacer sur l'image de l'objet affichée à l'écran un réticule (RE) de forme rectangulaire (RC) de telle façon à permettre à l'opérateur de circonscrire l'adresse postale (AD) à l'intérieur du réticule en manoeuvrant ledit dispositif de pointage (JS), **en ce que** l'unité centrale est programmée pour afficher, en réponse à une commande entrée par le clavier (CL), un champ de vecteurs (CV) sur ladite image de l'objet et orienter dans le plan de l'image ledit champ de vecteurs (CV) en réponse à une manoeuvre du dispositif de pointage pour aligner le champ de vecteurs avec (CV) les lignes de l'adresse postale (AD).

2. Le poste selon la revendication 1, dans lequel l'unité centrale est programmée pour agrandir ou réduire les dimensions du réticule rectangulaire (RC) en réponse à une commande entrée par le dispositif de pointage (JS).

## Claims

1. A video-coding station for an installation for automatically processing postal items, in particular packets, the station comprising a central processor unit for holding a digitised image of a postal item in memory, a screen (EC) connected to the central processor unit for displaying said image of a postal item in such a manner as to enable an operator to see a postal address (AD) of the postal item in the image, and a keyboard connected to the central processor unit to enable the operator to key in the postal address of the item, said station being **characterised in that** it further comprises a pointing device (JS) linked to the central processor unit and capable of moving a reticule (RE) of rectangular shape (RC) over the image of the item displayed on the screen in such a manner as to enable the operator to circumscribe the postal address (AD) within the reticule by maneuvering said pointing device (JS), and **in that** the central processor unit is programmed to display, in response to a command entered via the keyboard (CL), a field of vectors (CV) on said image of the item and to orientate said field of vectors (CV) in the plane of the image in response to a maneuver of the pointing device in order to align the field of vectors (CV) with the lines in the postal address (AD).

2. The station according to claim 1, in which the central processor unit is programmed so as to increase or reduce the dimensions of the rectangular reticule (RC) in response to a command entered via the pointing device (JS).

## Patentansprüche

1. Bildcodierungsstation für eine automatische Verarbeitungseinrichtung von postalischen Gegenständen, insbesondere Paketen, umfassend eine Zentraleinheit, die dazu bestimmt ist, ein digitales Bild eines postalischen Gegenstandes im Speicher zu halten, einen Bildschirm (EC), der mit der Zentraleinheit verbunden ist zum Anzeigen des Bildes eines postalischen Gegenstandes, um einer Bedienperson zu erlauben, in dem Bild eine postalische Adresse (AD) des postalischen Gegenstandes zu sichten, und eine Tastatur, die mit der Zentraleinheit verbunden ist, um der Bedienperson zu erlauben manuell die postalische Adresse des Gegenstandes zu erfassen,
**dadurch gekennzeichnet,**
**dass** die Station ferner eine Zeigevorrichtung (JS) umfasst, die mit der Zentraleinheit verbunden ist und geeignet ist, auf dem auf dem Bildschirm angezeigten Bild des Gegenstandes ein Fadenkreuz (RE) von rechteckiger Gestalt (RC) zu verlagert, derart, dass der Bedienperson ermöglicht ist, durch Handhabung der Zeigervorrichtung (JS) die postalische Adresse (AD) innerhalb des Fadenkreuzes zu umschreiben, und
**dass** die Zentraleinheit programmiert ist, in Reaktion auf einen über die Tastatur (CL) eingegebenen Befehl, ein Vektorfeld (CV) auf dem besagten Bild des Gegenstandes anzuzeigen und in der Ebene des Bildes das Vektorfeld (CV), in Reaktion auf eine Bedienung der Zeigervorrichtung, zu orientieren zum Ausfluchten des Vektorfeldes (CV) mit den Zeilen der postalischen Adresse (AD).

2. Station nach Anspruch 1, in der die Zentraleinheit programmiert ist zum Vergrößern oder Verkleinern der Dimensionen des rechteckigen Fadenkreuzes (RC) in Reaktion auf einen durch die Zeigervorrichtung (JS) eingegebenen Befehl.
